# EUROPEAN PATENT SPECIFICATION

(11) **EP 2 412 517 B1**
(45) Date of publication and mention of the grant of the patent: **21.08.2013**
(21) Application number: 11173002.4
(22) Date of filing: 07.07.2011
(51) Int. Cl.: B32B 1/04, B32B 17/02, E04B 1/76, B32B 3/06

(54) **System for the formation of small curvature radius in preformed mineral wool panels**
System zur Bildung kleiner Krümmungsradien in vorgeformten Mineralwollenpaneelen
Système d'informations de petit rayon de courbure dans des panneaux de laine minérale préformés

(30) Priority: 28.07.2010 ES 201000978
(43) Date of publication of application: 01.02.2012
(73) Proprietor: Saint-Gobain Cristaleria, S.A., 28046 Madrid (ES)
(72) Inventor: Lacalle, Iranzu, 28046 Madrid (ES); Lopez Belbeze, Gregorio, 28046 Madrid (ES); Rodero Antunez, Carlos, 28046 Madrid (ES); Diez Monforte, Alfonso, 28046 Madrid (ES)
(74) Representative: Isern-Jara, Nuria

(56) References cited:
- EP-A2- 0 303 537
- US-A1- 2006 053 559
- US-A1- 2007 060 005
- US-A1- 2008 003 346
- US-A1- 2008 220 679

## Description

### Object of the invention

This invention refers to a system for the formation of small curvature radius in preformed mineral wool panels, which brings about substantial novelty features in respect to preformed mineral wool panels of the type known in the field, which are used for the formation of ventilation or air conditioning conductions.

In other terms, the invention aims at the development of mineral wool panels preferably, although not exclusively, made out of mineral wool, of the type which are used in the manufacture of self supporting conductions for ventilation and/or distribution of conditioned air, in which a covering in the form of a thin web is integrated in one or both faces of the panel, having adjacent borders so that the complementary arrangement of two panels facilitates the fast coupling of the same; in which panels the formation of the borders shows a small curvature radius so that this formation facilitates the coupling of 2 panels with a part of their faces arranged at 90° permitting a perfect adjustment.

The field of application of the invention is to be found within the industrial field of the manufacture of components for air conduction installations, especially ventilation or air conditioning conductions, being additionally possible to find other applications in the finishing of ceilings by means of covering plates.

### Background to the invention

It is a broadly extended practice the manufacture of self supporting conductions for ventilation by means of mineral wool panels, especially glass fiber panels.

The mineral wool panels, generally glass fiber wool panels, for manufacturing conductions are formed by a mineral wool core, consisting of glass fiber, bound with heat hardenable binding materials, which receive a covering on both of its faces.

At present, panels of this type are already known, as may be seen in patents US-A-3922425, US-A-4696847 and FR-2025428 among others.

According to the state of the art, the glass fiber wool panels for the formation of conductions are cut and assembled, to which end the panels have borders so configurated that the complementary arrangement of such borders permits the easy and fast coupling of successively adjacent panels, permitting in this way the construction of networks of conductions for the distribution of air.

In practice, the conductions formed by means of these panels transport air along its interior with a given static and dynamic pressure, being desirable that the loss of pressure be as small as possible inside of the conductions.

The use of thin webs adhered to the mineral wool panels in one or both faces is also known in the present state of the art.

However, said thin webs although permitting the panel to obtain a higher rigidity, have the drawback that as they are placed on the entirety of the surface of the panels, they are the cause that in the preformation of a coupling by the borders or other form of finishing by moulding techniques, the thin web acts as a distribution plate preventing to obtain of small curvature radius in the preformation process.

According to the foregoing, the present invention essentially proposes the formation of panels which essentially differ from other known panels of the same type, in that the panel of the invention has the peculiarity of being made out by means of a system for the formation of small curvature radius which permit a better coupling and therefore a reduction of the loss of pressure. Further, and given the fact that the coupling which is obtained is much more precise, it is possible to substantially reduce the accumulation of dirt in the conductions, which results in a higher facility for cleaning the same.

With a panel constitution as proposed by the invention, substantial improvements are obtained affecting particularly the properties which are needed in this type of panels for its use in the construction of ventilation or air conditioning conductions, particularly concerning the loss of pressure and the facility for cleaning dirt.

However, it has to be understood that the invention has been described according to a preferred embodiment of the same which will be prone to modifications without introducing changes in the general features of the invention, thus the modifications could be introduced especially in the form, size and materials for the manufacture of the entire panel or of the component parts of the same.

### Description of the invention

The invention refers to a system for the formation of small curvature radius in preformed mineral wool panels, for conductions for the distribution of ventilation air or air conditioning, which provides essential novelty features and considerable advantages on the means known heretofore and used for the same purposes in the present state of the art.

According to the present state of the art, the preformation of border unions or other finishing patterns in the panels, requires ample curvature radius in the area of transition of the moulded region due to the fact that the rigidity of the thin covering webs presently used has the effect of acting as distribution layers which prevent the execution of small curvature radius.

Leaving a band free of the thin web on the mineral wool core in at least one of the borders, permits to carry out the formation of a border union which allows to obtain smaller curvature radius as the mineral wool has a higher deformation capacity when the thin web is absent, due to the fact that this latter acts on the mineral wool core as a distribution plate which does not allow a satisfactory definition of the shape.

As will be understood, an insulating panel for the construction of conductions for ventilation carried out as proposed by the present invention shows substantial advantages on the presently known panels of the state of the art among which are to be remarked:
- Reduction of pressure loss in the conductions network of the installations for the distribution of air with the subsequent improvement of the performance of the installation.
- Reduction of the voids or gaps prone to catch particles of dirt.
- Improvement of the cleaning capacity of the networks of conductions by substantially reducing the gap between joints.
- Increase of the rigidity of the network of conductions.

### Brief description of drawings

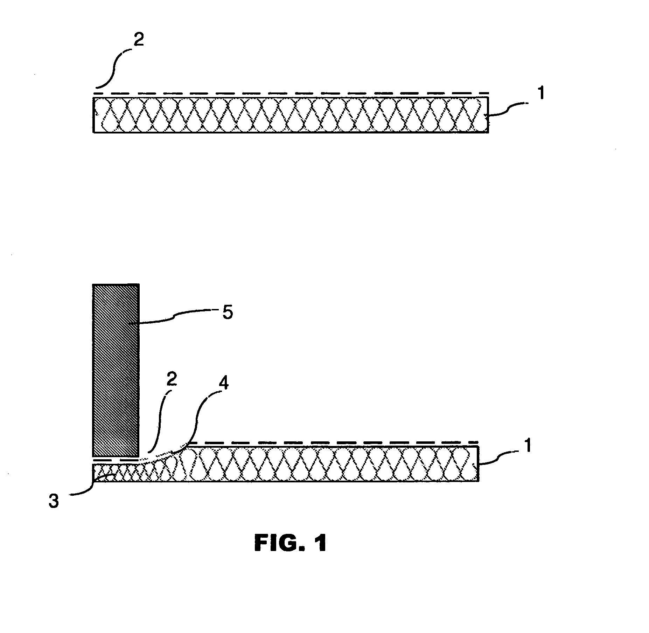

Figure 1.- Shows an illustration of a border of a panel formed according to the present state of the art.

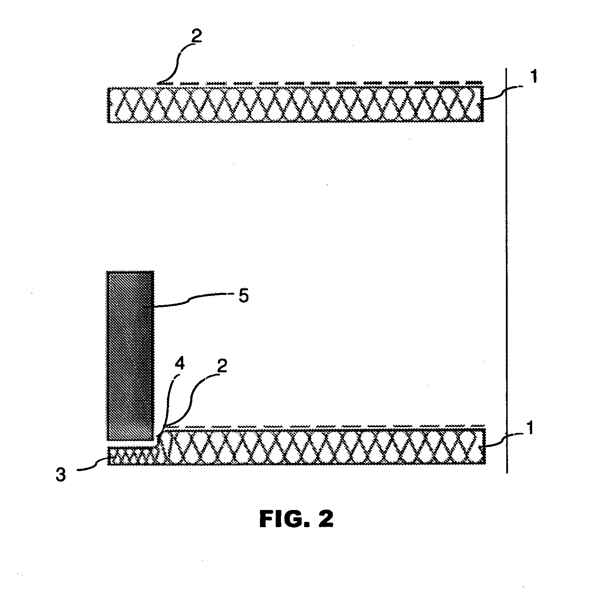

Figure 2.- Shows a view of the border of a panel according to the system for the formation of small curvature radius for mineral wool panels preformed according to the present invention.

### Description of a preferred embodiment

Taking into account the drawings and in consideration of the numbering of the parts which has been adopted, a preferred but not limitative embodiment of the invention has been shown, consisting in a preformed mineral wool panel having a mineral wool core (1) in which a thin covering web (2) has been integrated on one or both faces, said face being free of the thin web preferably on the mouldable band constituting the adjacent border (3) which permits the formation of small curvature radius (4), so that the union of the borders so obtained with a portion of the panel arranged at 90° (5) permits a perfect union without voids or gaps.

The details, shapes, dimensions and materials used in the manufacture of the preformed mineral wool panels according to the system for the formation of small curvature radius which is the object of the invention may be substituted by others technically equivalent and not departing from the essential features of the invention or from its scope as defined by the claims which are annexed in the following.

## Claims

1. System for the formation of small curvature radius in preformed mineral wool panels having a covering thin web on one or both faces, apart from other eventual external covering elements, with a higher structural rigidity, of the type used for the manufacture of conductions for ventilation or air conditioning comprised of a mineral wool core, particularly a glass fiber core, **characterized in that** at least one of the covering thin webs has a width less than the total width of the panel, leaving at least one end longitudinal band of the panel free of the covering web, so that a joint may be formed by a grooving and tonguing with curvature radius smaller than usual.

2. System for the formation of small curvature radius in preformed mineral wool panels according to claim 1, **characterized in that** the formation of the grooving and tonguing with a small curvature radius permits a border union to engage the panel on a receiving plate on another panel.

## Patentansprüche

1. System zur Bildung kleiner Krümmungsradien in vorgeformten Mineralwollpaneelen, die neben anderer, gegebenenfalls äußerer Beschichtungselemente auf einer oder auf beiden Seiten eine dünne Beschichtungsfolie mit hoher Struktursteifigkeit aufweisen, der Art die zum Bau von Ventilations- oder Klimatisierungskanälen verwendet wird, gebildet aus einem Mineralwollkern, insbesondere einem Glasfaserkern, **dadurch gekennzeichnet, dass** wenigstens eine der dünnen Beschichtungsfolien eine geringere Breite als die Gesamtbreite des Paneels aufweist, so dass wenigstens ein endseitiger Längsstreifen des Paneels nicht von der Beschichtungsfolie überzogen ist, so dass eine Verbindung durch Spundung mit einem geringeren Krümmungsradius als gewöhnlich gebildet werden kann.

2. System zur Bildung kleiner Krümmungsradien in vorgeformten Mineralwollpaneelen nach Anspruch 1, **dadurch gekennzeichnet, dass** die Bildung der Spundverbindung mit einem kleinen Krümmungsradius erlaubt, dass sich eine Randverbindung über die Aufnahmeplatte eines anderen Paneels mit dem Paneel verbindet.

## Revendications

1. Système de formation de rayons de petite courbure sur des panneaux en laine minérale préformés, disposant d'une mince couche de revêtement sur une face ou les deux, en plus, éventuellement, d'autres éléments extérieurs de revêtement, doté d'une grande rigidité structurelle, du type utilisé pour la construction de conduits pour ventilation ou climatisation, constitué d'une âme en laine minérale, notamment une âme en fibre de verre, **caractérisé en ce que**, au moins, l'un des éléments laminaires minces de revêtement a une largeur inférieure à la largeur totale du panneau, ce qui fait qu'au moins une bande longitudinale de l'extrémité du panneau est dépourvue d'élément de revêtement, de sorte qu'il est possible de créer un point d'union par assemblage avec un rayon de courbure plus petit que la normale.

2. Système de formation de rayons de petite courbure sur des panneaux en laine minérale préformés, selon la revendication 1, **caractérisé en ce que** la création de l'assemblage avec un petit rayon de courbure permet qu'une union de rebord puisse s'accoupler au panneau sur la plaque réceptrice d'un autre panneau.
